# EUROPEAN PATENT SPECIFICATION

(11) **EP 3 495 753 B1**
(45) Date of publication and mention of the grant of the patent: **12.08.2020**
(21) Application number: 17916462.9
(22) Date of filing: 24.10.2017
(51) Int. Cl.: F24D 19/10, F25B 30/06, F25B 1/00, F25B 25/00, F24D 3/18, F25B 30/02, F24D 17/00, F24D 17/02, F25B 41/00, F24D 19/00, F25B 47/00, F25B 49/02

(54) **GEOTHERMAL HEAT PUMP SYSTEM AND CONTROL METHOD FOR GEOTHERMAL HEAT PUMP SYSTEM**
GEOTHERMISCHES WÄRMEPUMPENSYSTEM UND VERFAHREN ZUR STEUERUNG EINES ERDWÄRMEPUMPENSYSTEMS
SYSTÈME DE POMPE À CHALEUR GÉOTHERMIQUE ET PROCÉDÉ DE COMMANDE DE SYSTÈME DE POMPE À CHALEUR GÉOTHERMIQUE

(43) Date of publication of application: 12.06.2019
(73) Proprietor: MITSUBISHI ELECTRIC CORPORATION, Chiyoda-ku Tokyo 100-8310 (JP)
(72) Inventor: AOYAGI, Yoshiro, Tokyo 100-8310 (JP)
(74) Representative: Pfenning, Meinig & Partner mbB
(86) International application number: PCT/JP2017/038326
(87) International publication number: WO 2019/082267

(56) References cited:
- EP-A1- 3 173 712
- WO-A1-2013/138695
- JP-A- 2001 296 073
- JP-A- 2010 175 136
- JP-A- 2010 175 136
- JP-A- 2010 249 468
- JP-A- 2013 190 162

## Description

### Technical Field

The present invention relates to a geothermal heat pump system that uses heat of the ground or the like as a heat source, collects and transfers heat using a heat pump by circulating a heat medium through an underground heat exchanger installed in the ground, and supplies hot water to a load side, and also relates to a method for controlling the geothermal heat pump system.

### Background Art

Conventionally, a geothermal heat pump system is known that uses heat of the ground or a lake as a heat source, circulates a heat medium through an underground heat exchanger installed in the ground, collects and transfers heat using a heat pump, and supplies hot water for heating or domestic use to a load side. The geothermal heat pump system uses renewable energy, namely, geothermal heat, which is stable in temperature throughout the year. Therefore, the geothermal heat pump system has higher efficiency and lower running cost as compared with other heating systems, and moreover, has recently been attracting attention as a system capable of reducing CO₂ emission.

In terms of heat collection, underground heat exchangers are classified into two types: a borehole type heat exchanger and a horizontal loop type heat exchanger. The borehole type heat exchanger collects and transfers heat by forming a vertical borehole 100 m to 150 m deep in the ground by boring and inserting a heat-exchanging pipe into the vertical borehole. The horizontal loop type heat exchanger collects and transfers heat by burying a heat-exchanging pipe horizontally in a 1 m to 2.5 m-deep superficial layer of the ground.

During operation of the geothermal heat pump system, a fluid circulating through the underground heat exchanger as a heat medium collects and transfers heat by exchanging heat with the ground through the underground heat exchanger while transferring heat to refrigerant by exchanging heat with the refrigerant, whereby heat on the ground side is consumed. Through heat exchange with the refrigerant, temperature of the fluid circulating through the underground heat exchanger keeps on falling, and the fluid lower than zero degrees flows into the heat-exchanging pipe of the underground heat exchanger or a circulation circuit including the heat-exchanging pipe. Therefore, to prevent the fluid from freezing, antifreeze, namely, brine, is put in the fluid circulating through the circulation circuit. Manufacturers of geothermal heat pump systems specify in installation manuals that brine be put in the fluid circulating through the circulation circuit. In accordance with the description in the installation manuals, installers of geothermal heat pump systems put brine in the fluid circulating through the circulation circuit, at the time of installation of the geothermal heat pump systems.

If the installer forgets to put brine at the time of installation of the geothermal heat pump system, the fluid such as water flowing through the underground heat exchanger may freeze when its temperature falls below zero degrees, and if the fluid freezes, the underground heat exchanger buried underground and used for heat collection and transfer may be broken. This makes it necessary to detect whether the concentration of brine in the fluid flowing through the underground heat exchanger is in an appropriate range and prevent the fluid from freezing.

In relation to a chiller, which is a cooling apparatus, Patent Literature 1 describes a configuration that uses a cooled fluid mixed with an additive adapted to lower a freezing point and detects concentration of the cooled fluid without using a measuring instrument such as a concentration meter. To detect the concentration of the cooled fluid, physical property values of the cooled fluid are used, where the physical property values are calculated based on operation information about the cooling apparatus. The operation information includes temperature of a cooled medium flowing into an evaporator configured to exchange heat between the cooled fluid and refrigerant, temperature of the cooled medium flowing out of the evaporator, flow rate of the cooled fluid in a flow path through which the cooled fluid circulates, and other variables.
JP 2010 175136 A discloses a geothermal heat pump system configured to perform determining a number of underground heat exchangers to be operated on a basis of and a concentration of circulated antifreeze liquid and a comparing result from a predetermined value and a temperature of heat medium flowing out from the underground heat exchangers.
EP 3 173 712 A1 discloses an automatic fluid mixture filling device for hydraulic system configured to control the ratio of a first fluid and a second fluid in a circuit on a basis of signals indicating a pressure of the mixture fluid comprising the first fluid and the second fluid in the circuit and a concentration of the second fluid in the mixture fluid.

### Citation List

### Patent Literature

Patent Literature 1: Japanese Unexamined Patent Application Publication No. 2013-190162

### Summary of Invention

### Technical Problem

To apply the technique described in Patent Literature 1 to the geothermal heat pump system, it is necessary to detect inflow temperature of the fluid flowing into the underground heat exchanger, outflow temperature of the fluid flowing out of the underground heat exchanger, and flow rate of the fluid. However, the inflow temperature, outflow temperature, and flow rate of the fluid depend on pipe length of an underground pipe of the underground heat exchanger in the geothermal heat pump system. Therefore, if the technique described in Patent Literature 1 is applied as it is to a geothermal heat pump system when the geothermal heat pump system has an underground heat exchanger, of which the pipe length of the underground pipe is unknown, brine concentration cannot be detected accurately. Thus, risks that may occur when brine concentration is not appropriate cannot be avoided in advance.

The present invention has been made to solve the above problem, and an object thereof is to provide a highly reliable geothermal heat pump system and a control method therefor that can avoid in advance possible risks that may occur when brine concentration is not appropriate.

### Solution to Problem

A geothermal heat pump system according to one embodiment of the present invention as defined by appended independent claim 1 comprises a heat pump apparatus including a compressor, a first heat exchanger configured to exchange heat between water supplied to a load side and refrigerant, an expansion valve, a second heat exchanger configured to exchange heat between the refrigerant and a heat medium, a heat collection pump and a third heat exchanger configured to exchange heat between the heat medium and geothermal heat; and a controller, wherein the compressor, the first heat exchanger, the expansion valve, and the second heat exchanger are connected in sequence by pipes, thereby forming a refrigerant circuit through which the refrigerant circulates, the heat collection pump, the second heat exchanger, and the third heat exchanger are connected in sequence by pipes, thereby forming a heat collection circuit through which the heat medium circulates, and the heat collection circuit includes a bypass mechanism allowing the heat medium to bypass the third heat exchanger when the heat medium circulates, and the controller drives, when operation of the geothermal heat pump system is started, the bypass mechanism to allow the heat medium to bypass the third heat exchanger and circulate in the heat collection circuit, estimates concentration of brine in the heat medium circulating through the heat collection circuit, determines whether the concentration of the brine falls outside an appropriate range, and stops the operation of the geothermal heat pump system when the concentration of the brine falls outside the appropriate range, wherein the geothermal heat pump system further comprisesa storage unit storing data representing relationships of the concentration of the brine to temperature and flow rate of the heat medium, a heat collection return sensor installed on an inflow side of the second heat exchanger and configured to detect the temperature of the heat medium flowing into the second heat exchanger; a heat collection supply sensor installed on an outflow side of the second heat exchanger and configured to detect the temperature of the heat medium flowing out of the second heat exchanger; and a heat collection flow sensor installed between the second heat exchanger and the bypass mechanism and configured to detect the flow rate of the heat medium circulating through the heat collection circuit, wherein the controller measures the flow rate of the heat medium circulating in the heat collection circuit based on a detection result obtained by the heat collection flow sensor, measures return temperature of the heat medium flowing into the second heat exchanger based on a detection result obtained by the heat collection return sensor, and measures supply temperature of the heat medium flowing out of the second heat exchanger based on a detection result obtained by the heat collection supply sensor, and searches the data stored in the storage unit based on the measured flow rate of the heat medium, the measured return temperature of the heat medium, and the measured supply temperature of the heat medium, and estimates the concentration of the brine in the heat medium.

Further, a method for controlling a geothermal heat pump system according to another embodiment of the present invention as defined by appended independent claim 9 is a method for controlling a geothermal heat pump system including a compressor, a first heat exchanger configured to exchange heat between water supplied to a load side and refrigerant, an expansion valve, a second heat exchanger configured to exchange heat between the refrigerant and a heat medium, a heat collection pump and a third heat exchanger configured to exchange heat between the heat medium and geothermal heat, a storage unit storing data representing relationships of concentration of brine in the heat medium to temperature and flow rate of the heat medium, and a controller, wherein the compressor, the first heat exchanger, the expansion valve, and the second heat exchanger are connected in sequence by pipes, thereby forming a refrigerant circuit through which the refrigerant circulates, the heat collection pump, the second heat exchanger, and the third heat exchanger are connected in sequence by pipes, thereby forming a heat collection circuit through which the heat medium circulates, and the heat collection circuit includes a bypass mechanism allowing the heat medium to bypass the third heat exchanger when the heat medium circulates,
wherein the geothermal heat pump system further comprises a heat collection return sensor installed on an inflow side of the second heat exchanger and configured to detect the temperature of the heat medium flowing into the second heat exchanger; a heat collection supply sensor installed on an outflow side of the second heat exchanger and configured to detect the temperature of the heat medium flowing out of the second heat exchanger; and a heat collection flow sensor installed between the second heat exchanger and the bypass mechanism and configured to detect the flow rate of the heat medium circulating through the heat collection circuit,
the method comprising: a bypass mechanism driving step of driving the bypass mechanism; a measuring step of measuring the temperature and flow rate of the heat medium after execution of the bypass mechanism driving step; an estimation step of estimating the brine concentration in the heat medium based on measurement results obtained by the measuring step and the data stored in the storage unit which based on measured flow rate of the heat medium, the measured return temperature of the heat medium, and the measured supply temperature of the heat medium, is searched for; a determination step of determining whether the brine concentration estimated in the estimation step falls within an appropriate range; and an operation control step of controlling operation of the geothermal heat pump system based on a result obtained by the determination step.

### Advantageous Effects of Invention

According to embodiments of the present invention, the geothermal heat pump system and the method for controlling the geothermal heat pump system step operation if the brine concentration in the heat medium flowing into the underground heat exchanger falls outside the range. Thus, possible risks that may occur when brine concentration is not appropriate can be avoided in advance, thereby improving reliability of the system.

### Brief Description of Drawings

[Fig. 1] Fig. 1 is a system configuration diagram of a geothermal heat pump system according to an embodiment of the present invention.
[Fig. 2] Fig. 2 is a functional block diagram of the geothermal heat pump system according to the embodiment of the present invention.
[Fig. 3] Fig. 3 is a graph showing relationships of brine concentration to temperature and flow rate of a heat medium.
[Fig. 4] Fig. 4 is a flowchart showing processing steps for operation of a hot-water heating apparatus in the geothermal heat pump system according to the embodiment of the present invention.
[Fig. 5] Fig. 5 is a system configuration diagram of a variation of the geothermal heat pump system according to a variation of the embodiment of the present invention.

### Description of Embodiments

An embodiment of a geothermal heat pump system according to the present invention will be described in detail below with reference to the accompanying drawings. Note that the present invention is not limited by the embodiment described below. Besides, in the following drawings, the sizes and shapes of components may be different from their actual sizes and shapes.

### Embodiment

### <Overview>

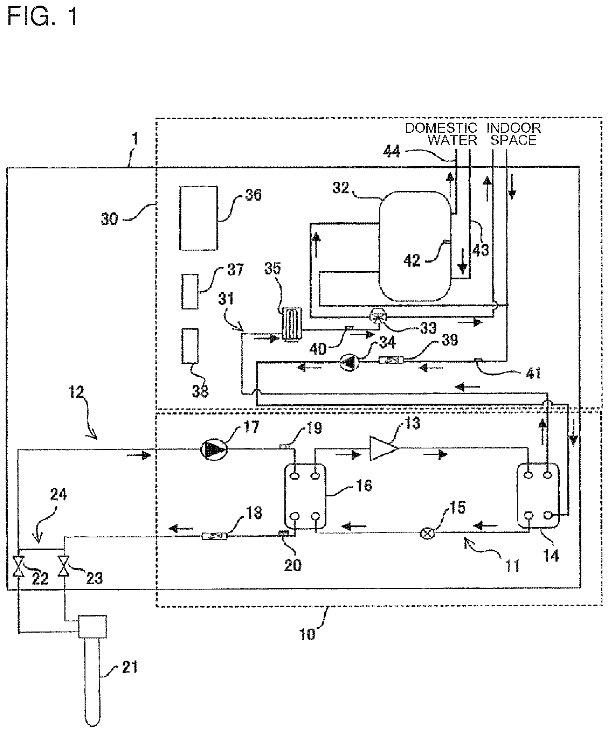

Fig. 1 is a system configuration diagram of a geothermal heat pump system according to an embodiment of the present invention. The geothermal heat pump system 1 includes a heat pump apparatus 10 that is configured to perform operation of a heat pump cycle, i.e., a refrigeration cycle; and a hot-water heating apparatus 30 that is adapted to supply hot water. The geothermal heat pump system 1 is connected with an underground heat exchanger 21, which is a third heat exchanger buried underground and is configured to circulate a heat medium through the underground heat exchanger 21 and collect and transfer heat using a heat pump. The underground heat exchanger 21 is a heat exchanger of the borehole type. That is, a heat-exchanging pipe is laid in a vertical borehole formed in the ground to a depth of 100 m to 150 m by boring. In the heat pump apparatus 10, heat is exchanged between refrigerant circulating through a refrigerant circuit 11 and the heat medium circulating through a heat collection circuit 12 and heat is exchanged between the refrigerant in the refrigerant circuit 11 and water circulating through a water circuit 31. Then, by circulating the water, the hot-water heating apparatus 30 performs heating operation and hot-water supply operation, where the heating operation involves supplying hot water for heating to the indoor space and the hot-water supply operation involves heating water stored in a hot-water storage tank 32 of the water circuit 31.

### <Equipment configuration>

The heat pump apparatus 10 includes a compressor 13, a water-refrigerant heat exchanger 14, which is a first heat exchanger, an expansion valve 15, a refrigerant-brine heat exchanger 16, which is a second heat exchanger, and a heat collection pump 17. The compressor 13 is a compressor in which its rotation speed and capacity are controlled by an inverter and configured to compress the refrigerant and discharge high-temperature, high-pressure gas refrigerant. The expansion valve 15 is an electronic expansion valve of which the opening degree can be variably controlled. The water-refrigerant heat exchanger 14 and the refrigerant-brine heat exchanger 16 are, for example, plate heat exchangers. The heat pump apparatus 10 includes a heat collection flow sensor 18, a heat collection return sensor 19, and a heat collection supply sensor 20. The heat collection return sensor 19 is installed on an inflow side of the refrigerant-brine heat exchanger 16 and the heat collection supply sensor 20 is installed on an outflow side of the refrigerant-brine heat exchanger 16.

The hot-water heating apparatus 30 includes the hot-water storage tank 32, a three-way valve 33, a hot-water circulating pump 34, an electric heater 35, a controller 36, a remote control 37, and an alarm device 38. The controller 36 is a device configured to generally control the geothermal heat pump system 1. The remote control 37 can be operated by an installer and an end user of the geothermal heat pump system 1. The installer and the end user enter a variety of information via the remote control 37. The entered information is transmitted from the remote control 37 to the controller 36. Further, under the control of the controller 36, warnings are issued to the end user via the remote control 37. The alarm device 38 is intended to issue warnings to the end user by voice and configured to sound an alarm under the control of the controller 36. Contents of the warnings issued to the end user will be described later.

The hot-water storage tank 32 has a substantially cylindrical shape, and at least an outer shell of the hot-water storage tank 32 is made of a metallic material such as stainless steel. A lower part of the hot-water storage tank 32 is connected with a water supply pipe 43 used to supply water from a water utility or another water supply source outside the geothermal heat pump system 100. The water flowing in from the water supply pipe 43 is stored in the hot-water storage tank 32. A hot-water storage tank sensor 42 is installed in the hot-water storage tank 32. The hot-water storage tank sensor 42 detects hot-water temperature in the hot-water storage tank 32. An upper part of the hot-water storage tank 32 is connected with a hot-water outlet pipe 44 used to take out hot water generated in the hot-water storage tank 32. The hot-water storage tank 32 is covered with a heat insulator to inhibit the hot water stored in the hot-water storage tank 32 from transferring heat.

The hot-water heating apparatus 30 includes a hot-water circulation flow sensor 39, a water temperature sensor 40, and a water temperature sensor 41. The water temperature sensor 40 is installed on an outflow side of the electric heater 35 and the water temperature sensor 41 is installed on an inflow side of the hot-water circulating pump 34.

### <Circuit configuration>

The refrigerant-brine heat exchanger 16, the underground heat exchanger 21, and the heat collection pump 17 are connected in sequence by pipes, forming the heat collection circuit 12 through which the heat medium circulates. The heat medium is circulated through the heat collection circuit 12 by the heat collection pump 17.

The refrigerant-brine heat exchanger 16 is connected with the underground heat exchanger 21 via a bypass valve 22 and a bypass valve 23. In the heat collection circuit 12, a bypass 24 is formed in a preceding stage of the underground heat exchanger 21. The bypass valve 22, the bypass valve 23, and the bypass 24 constitute a bypass mechanism. When the bypass valve 22 and the bypass valve 23 are opened, the heat medium flows into the underground heat exchanger 21, collects geothermal heat, and flows out of the underground heat exchanger 21, thereby circulating through the heat collection circuit 12. When the bypass valve 22 and bypass valve 23 are closed, the heat medium bypasses the underground heat exchanger 21 to flow through the bypass 24 and thereby circulating in the heat collection circuit 12. The opening and closing of the bypass valve 22 and the bypass valve 23 are controlled by the controller 36.

The compressor 13, the water-refrigerant heat exchanger 14, the expansion valve 15, and the refrigerant-brine heat exchanger 16 are connected in sequence by pipes, forming a refrigerant circuit 11 through which the refrigerant circulates. Refrigerant available for use in the present embodiment includes HFC mixed refrigerant such as R410 and R32 and natural refrigerant such as CO₂ and propane.

The hot-water storage tank 32, the hot-water circulating pump 34, the water-refrigerant heat exchanger 14, the electric heater 35, and the three-way valve 33 are connected in sequence by pipes, thereby forming the water circuit 31. Hot water is circulated through the water circuit 31 by the hot-water circulating pump 34. A circulation destination of the hot water is switched by the three-way valve 33 between the hot-water storage tank 32 and the indoor space to be air-conditioned.

A flow rate of the heat medium circulating through the heat collection circuit 12 is measured by the heat collection flow sensor 18. Temperature of the heat medium flowing into the refrigerant-brine heat exchanger 16 is measured by the heat collection return sensor 19 while temperature of the heat medium flowing out of the refrigerant-brine heat exchanger 16 is measured by the heat collection supply sensor 20.

A flow rate of the water circulating through a water circuit 31 is measured by the hot-water circulation flow sensor 39. Temperature of hot water flowing into the hot-water storage tank 32 or hot water flowing into the indoor space to be air-conditioned is measured by the water temperature sensor 40. Temperature of water returning from the indoor space to be air-conditioned and flowing into the water-refrigerant heat exchanger 14 is measured by the water temperature sensor 41.

According to the present embodiment, water mixed with antifreeze, namely, brine, which is an additive that lowers a freezing point, is used as the heat medium circulating through the heat collection circuit 12. The brine used is organic brine made of organic matter, which is a nonelectrolyte, and composed principally of methanol, ethanol, ethylene glycol, or propylene glycol.

Freezing temperature, i.e., a freezing point, of the heat medium, which is a fluid, varies with brine concentration, which is contained concentration of the additive. Therefore, the brine concentration in the heat medium is adjusted such that the freezing point of the heat medium will be lower than an operating temperature range of the heat medium to which the brine is added. For example, if a lower limit of the operating temperature range is -8 degrees C, the brine concentration is adjusted such that the freezing point of the heat medium will be -18 degrees C. The higher the brine concentration is made through increases in content of the additive, the lower the freezing point of the heat medium becomes; and the lower the brine concentration is made through decreases in content of the additive, the higher the freezing point of the heat medium becomes.

Thus, the freezing point of the heat medium flowing into the underground heat exchanger 21 can be adjusted through adjustment of the brine concentration. On the other hand, the heat medium with brine added thereto is characterized by changing viscosity with changes in brine concentration. Concentration of the heat medium affects a circulating flow rate of the heat medium, which is a fluid. In addition, viscosity of brine changes with changes in fluid temperature, and as the temperature of the heat medium is lowered, the viscosity of the heat medium is increased, resulting in reduction in the circulating flow rate of the heat medium.

### <Operation>

In Fig. 1, the directions of arrows represent a refrigerant flow direction, a water flow direction, and a heating-medium flow direction when the hot-water heating apparatus 30 is performing heating operation or hot-water supply operation. Here, the heating operation is performed to supply hot water to the indoor space to be air-conditioned and the hot-water supply operation is performed to heat the hot water in the hot-water storage tank 32.

The heat medium flowing out of the refrigerant-brine heat exchanger 16 flows in the direction of arrows in Fig. 1, flows into the underground heat exchanger 21, and exchanges heat with geothermal heat in the underground heat exchanger 21, thereby collecting and transferring heat. The heat medium flowing out of the underground heat exchanger 21 flows into the refrigerant-brine heat exchanger 16, and exchanges heat with the refrigerant circulating through the refrigerant circuit 11.

The refrigerant compressed by the compressor 13 into a high-temperature, high-pressure state is discharged from the compressor 13 in the direction of arrows in Fig. 1 and flows into the water-refrigerant heat exchanger 14. The water-refrigerant heat exchanger 14 exchanges heat between the refrigerant discharged from the compressor 13 and water in the water circuit 31. That is, the water in the water circuit 31 is heated, generating hot water. Subsequently, the refrigerant is decompressed by the expansion valve 15 into a low-temperature, low-pressure state and flows into the refrigerant-brine heat exchanger 16. The refrigerant-brine heat exchanger 16 exchanges heat between the low-temperature, low-pressure refrigerant and the heat medium in the heat collection circuit 12. The refrigerant flowing out of the refrigerant-brine heat exchanger 16 in a high-temperature, high-pressure state is sucked into the compressor 13. During heating operation and hot-water supply operation, this operation cycle is repeated.

The hot water of which the temperature is increased as a result of heat exchange in the water-refrigerant heat exchanger 14 flows out of the water-refrigerant heat exchanger 14 and is further heated supplementarily by the electric heater 35, and reaches the three-way valve 33. As the three-way valve 33 is controlled, the circulation destination of the hot water is switched to the indoor space or hot-water storage tank 32. Driving of the electric heater 35 and switching of the three-way valve 33 are controlled by the controller 36. When the three-way valve 33 is controlled so as to change the circulation destination to the indoor, hot water is circulated to an indoor radiator (not shown), and consequently the indoor space can be heated. When the three-way valve 33 is controlled so as to change the circulation destination to the hot-water storage tank 32, the hot water flows into the hot-water storage tank 32 and exchanges heat with the water stored in the hot-water storage tank 32. The water stored in the hot-water storage tank 32 is heated and supplied as domestic water. The water of which the temperature is lowered by exchanging heat with the water stored in the hot-water storage tank 32 and the water reduced in temperature by exchanging heat in the indoor radiator flow into the water-refrigerant heat exchanger 14 through the hot-water circulating pump 34.

As a result of the water-heating operation described above, the water stored in the hot-water storage tank 32 is heated, generating hot water. Hot water is stored in the hot-water storage tank 32 by being thermally stratified such that the temperature will be higher on an upper side than on a lower side. The hot water generated in the hot-water storage tank 32 is supplied to outside the geothermal heat pump system 1 through the hot-water outlet pipe 44 and used as water for domestic or other uses.

Thus, the geothermal heat pump system 1 circulates a heat medium through the underground heat exchanger 21, collects and transfers heat using a heat pump, and supplies hot water for heating or hot water for domestic use to the hot-water heating apparatus 30 on a load side.

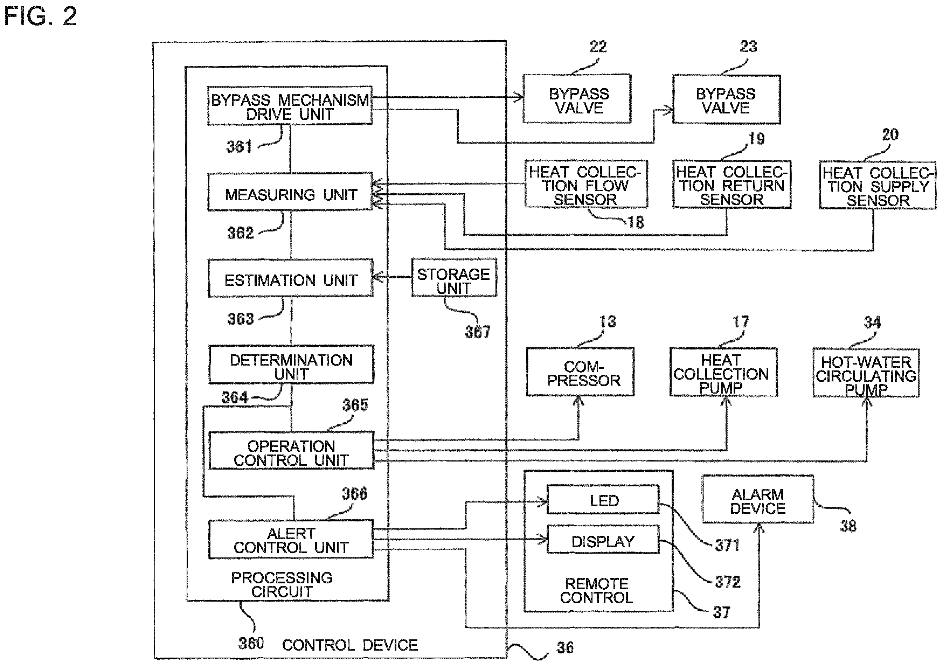

Fig. 2 is a functional block diagram of the geothermal heat pump system according to the embodiment of the present invention. The controller 36 includes a bypass mechanism drive unit 361, a measuring unit 362, an estimation unit 363, a determination unit 364, an operation control unit 365, an alert control unit 366, and a storage unit 367. Functions of each of the bypass mechanism drive unit 361, the measuring unit 362, the estimation unit 363, the determination unit 364, the operations of control unit 365, and the alert control unit 366 of the controller 36 are implemented by a processing circuit 360. The remote control 37 includes an LED 371 and a display 372.

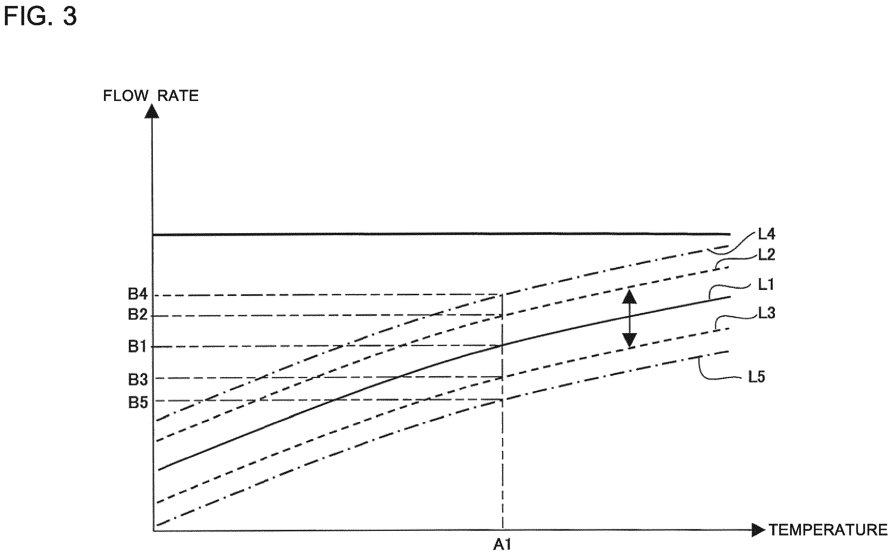

Data that represents relationships of brine concentration to return temperature, supply temperature, and flow rate of the heat medium circulating through the heat collection circuit 12 is recorded in the storage unit 367 of the controller 36. In addition, appropriate values of brine concentration are recorded in the storage unit 367 by being associated with types of brine. Fig. 3 is a graph showing relationships of brine concentration to temperature and flow rate of a heat medium. In the graph of Fig. 3, the abscissa represents the temperature of the heat medium and the ordinate represents the flow rate of the heat medium. Solid line L1 represents appropriate values of brine concentration. In the example of brine shown in Fig. 3, the brine concentration is appropriate when the temperature of the heat medium is A1 and the flow rate is B1. An appropriate range of the brine concentration is indicated by dotted line L2 and dotted line L3. Dotted line L2 indicates an upper limit of the appropriate range and dotted line L3 indicates a lower limit of the appropriate range. For example, when the temperature of the heat medium is A1, if the flow rate of the heat medium is in a range of B2 to B3, the brine concentration is in the appropriate range. Alternate long and short dash line L4 and alternate long and short dash line L5 indicate examples of measured values. As indicated by alternate long and short dash line L4, when the temperature of the heat medium is A1 and the flow rate of the heat medium is B4, the brine concentration is lower than the appropriate range. Further, as indicated by alternate long and short dash line L5, when the temperature of the heat medium is A1 and the flow rate of the heat medium is B5, the brine concentration is higher than the appropriate range. The relationships of the appropriate values of brine concentration to the temperature and flow rate of the heat medium shown in Fig. 3 is exemplary, and the relationships vary in accordance with the type of brine.

In the present embodiment, the above-mentioned appropriate range of the brine concentration is set by the installer at the time of installation of the geothermal heat pump system 1. The appropriate range of the brine concentration is determined as follows. First, the installer enters the type of brine via the remote control 37. The controller 36 acquires the appropriate value recorded in the storage unit 367 based on the entered type of brine and displays the acquired value on the display 372 of the remote control 37. The installer confirms the appropriate value displayed on the display 372, and sets an appropriate range via the remote control 37. The set appropriate range is recorded in the storage unit 367.

The bypass mechanism drive unit 361 shown in Fig. 2 opens and closes the bypass valve 22 and the bypass valve 23. When the bypass mechanism drive unit 361 closes the bypass valve 22 and the bypass valve 23, as described above, in the heat collection circuit 12 of Fig. 1, the heat medium flows through the bypass 24 to bypass the underground heat exchanger 21 when the heat medium circulates.

Based on a detection result obtained by the heat collection flow sensor 18, the measuring unit 362 measures the flow rate of the heat medium circulating through the heat collection circuit 12. Further, the measuring unit 362 measures the temperature of the heat medium flowing into the refrigerant-brine heat exchanger 16, based on a detection result obtained by the heat collection return sensor 19, and measures the temperature of the heat medium flowing out of the refrigerant-brine heat exchanger 16, based on a detection result obtained by the heat collection supply sensor 20.

Based on a detection result obtained by the measuring unit 362 and the above-mentioned data recorded in the storage unit 367, the estimation unit 363 estimates the brine concentration in the heat medium circulating through the heat collection circuit 12.

The determination unit 364 determines whether the brine concentration estimated by the estimation unit 363 falls within the above-mentioned appropriate range recorded in the storage unit 367.

Based on a determination result obtained by the determination unit 364, the operation control unit 365 controls operation of the compressor 13, the heat collection pump 17, and the hot-water circulating pump 34.

Based on the determination result obtained by the determination unit 364, the alert control unit 366 controls lighting of the LED 371 on the remote control 37, display on the display 372, and driving of the alarm device 38. As the LED 371 is lit and a character string, an icon, or the like is displayed on the display 372, the end user is notified that the brine concentration in the heat medium circulating through the heat collection circuit 12 is not in an appropriate range. In addition, as the alarm device 38 is driven, the end user is notified by voice that the brine concentration in the heat medium circulating through the heat collection circuit 12 is not in an appropriate range.

The processing circuit 360 may be dedicated hardware or a CPU (Central Processing Unit) configured to run programs stored in memory. Note that the CPU is also referred to as a processing apparatus, an arithmetic unit, a microprocessor, a microcomputer, a processor, or a DSP (Digital Signal Processor).

When the processing circuit 360 is dedicated hardware, the processing circuit 360 is, for example, a single circuit, composite circuit, programed processor, parallel programmed processor, ASIC, FPGA, or a combination thereof. The functions of individual ones of the bypass mechanism drive unit 361, the measuring unit 362, the estimation unit 363, the determination unit 364, the operation control unit 365, and the alert control unit 366 may be implemented separately by processing circuits or may be implemented collectively by a processing circuit.

When the processing circuit 360 is a CPU, the functions of the bypass mechanism drive unit 361, the measuring unit 362, the estimation unit 363, the determination unit 364, the operation control unit 365, and the alert control unit 366 are implemented by software, firmware, or a combination of software and firmware. Software and firmware are described in the form of programs and stored in memory. The processing circuit 360 reads out and executes the programs stored in memory and thereby to implement the functions of the individual units. That is, the controller 36 includes a memory for use to store programs configured to carry out steps corresponding to the functions of the individual units as a result when executed by the processing circuit 360. The steps corresponding to the functions of the individual units will be described later. In addition, it can be said that the programs cause a computer to carry out procedures and methods of the bypass mechanism drive unit 361, the measuring unit 362, the estimation unit 363, the determination unit 364, operation control unit 365, and alert control unit 366. Here, examples of the memory include nonvolatile or volatile semiconductor memories such as a RAM, a R OM, a flash memory, an EPROM, and an EEPROM; and a magnetic disk, a flexible disk, an optical disk, a compact disk, a mini-disk, and a DVD.

Note that part of the functions of the bypass mechanism drive unit 361, measuring unit 362, estimation unit 363, determination unit 364, operation control unit 365, and alert control unit 366 may be implemented by dedicated hardware and other part of the functions may be implemented by software or firmware.

In this way, the processing circuit 360 can implement the above function using hardware, software, firmware, or a combination thereof.

The storage unit 367 is made up, for example, of a nonvolatile semiconductor memory such as an EPROM or EEPROM, or a magnetic disk, flexible disk, optical disk, or other memory disk.

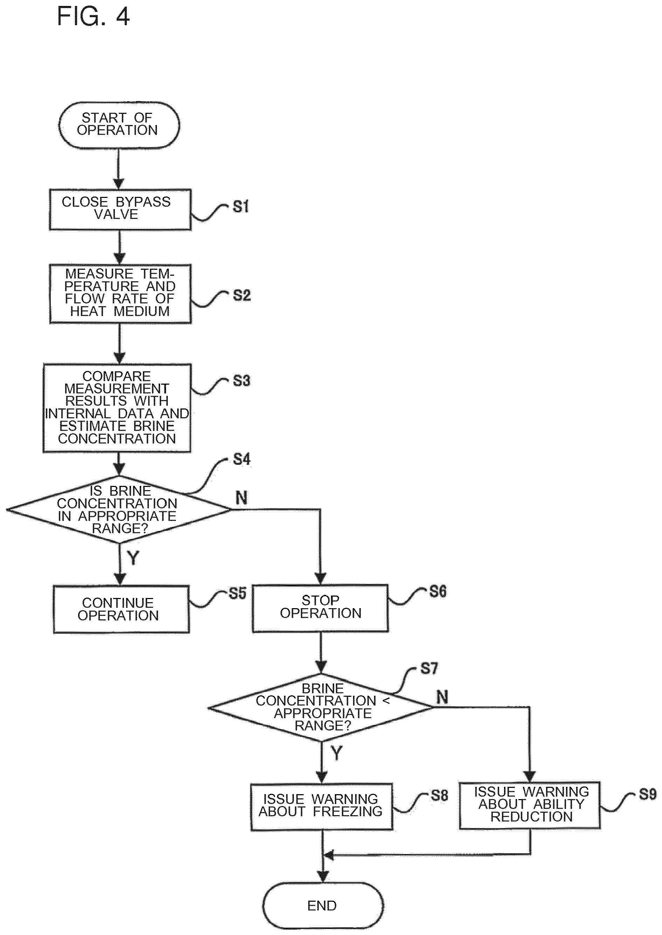

Fig. 4 is a flowchart showing processing steps for operation of the hot-water heating apparatus in the geothermal heat pump system according to the embodiment of the present invention. Here, the operation means the heating operation and the hot-water supply operation described above. When operation of the hot-water heating apparatus 30 is started, the bypass mechanism drive unit 361 of the controller 36 closes the bypass valve 22 and the bypass valve 23 in step S1 after a lapse of a predetermined time. Consequently, the heat medium circulating through the heat collection circuit 12 flows into the bypass 24 rather than the underground heat exchanger 21. After the process of step S1, in step S2, based on a detection result obtained by the heat collection flow sensor 18, the measuring unit 362 measures the flow rate of the heat medium circulating through the heat collection circuit 12. Further, the measuring unit 362 measures the return temperature of the heat medium flowing into the refrigerant-brine heat exchanger 16, based on a detection result obtained by the heat collection return sensor 19, and measures the supply temperature of the heat medium flowing out of the refrigerant-brine heat exchanger 16, based on a detection result obtained by the heat collection supply sensor 20.

In step S3, the estimation unit 363 compares the measurement results obtained in step S2 with the above-mentioned data stored in the storage unit 367 and estimates the brine concentration in the heat medium circulating through the heat collection circuit 12. That is, based on the flow rate, return temperature, and supply temperature of the heat medium obtained in step S2, information indicating the relationship between the brine concentration stored in the storage unit 367 and the temperature and flow rate of the fluid is searched for. Then, the brine concentration in the heat medium circulating through the heat collection circuit 12 is estimated.

Next, in step S4, the determination unit 364 determines whether the brine concentration estimated in step S3 is in the appropriate range. The determination unit 364 carries out the process of step S4 using the appropriate range of brine concentration set by the installer as described above and stored in the storage unit 367.

When the determination unit 364 determines in step S4 that the estimated brine concentration is in the appropriate range, the flow proceeds to step S5. In step S5, the operation control unit 365 opens the bypass valve 22 and the bypass valve 23. Then, the operation of the geothermal heat pump system 1 is continued.

When the determination unit 364 determines in step S4 that the estimated brine concentration is outside the appropriate range, the flow proceeds to step S6. When the estimated brine concentration is outside the appropriate range, the geothermal heat pump system 1 could malfunction as described later. Thus, in step S6, the operation control unit 365 stops driving the compressor 13, the heat collection pump 17, and the hot-water circulating pump 34 and stops the operation of the geothermal heat pump system 1.

Next, the flow proceeds to step S7, in which the determination unit 364 determines whether the estimated brine concentration is lower than the appropriate range. When the determination unit 364 determines in step S7 that the estimated brine concentration is lower than the appropriate range, the flow proceeds to step S8. A situation in which the estimated brine concentration is lower than the appropriate range occurs when the freezing point of the brine is higher than the operating temperature range of the geothermal heat pump system 1. Therefore, when the temperature of the heat medium flowing through the underground heat exchanger 21 falls as a result of continued operation, the brine solidifies and the heat medium freezes, which may give rise to the risk of breaking the underground heat exchanger 21. Thus, in step S8, the alert control unit 366 issues a warning about freezing. The alert control unit 366 transmits a control signal to the remote control 37, instructing the remote control 37 to light the LED 371 and display a character string and an icon indicating details of the risk, i.e., the possibility of freezing of the heat medium, on the display 372. In addition, the alert control unit 366 outputs a drive signal to the alarm device 38 of the hot-water heating apparatus 30. Consequently, via lighting of the LED 371 on the remote control 37, display on the display 372, and an alarm issued by the alarm device 38, the end user is notified that the brine may freeze.

When the determination unit 364 determines in step S7 that the estimated brine concentration is not lower than the appropriate range, the flow proceeds to step S9. A situation in which the estimated brine concentration is not in the appropriate range and is not lower than the appropriate range occurs when the estimated brine concentration is higher than the appropriate range and the viscosity of the brine is higher than an appropriate range. Therefore, the flow rate of the heat medium containing the brine may become lower than an appropriate flow rate. When temperature of the brine flowing through the underground heat exchanger 21 falls as a result of continued operation, the flow rate of the heat medium falls more conspicuous. As a result, there is a possible risk of reduction in ability of the geothermal heat pump system 1. Thus, in step S9, the alert control unit 366 issues a warning about ability reduction. The alert control unit 366 transmits a control signal to the remote control 37, instructing the remote control 37 to light the LED and display a character string and an icon indicating details of the risk, i.e., the possibility of reduction in the ability of the geothermal heat pump system 1, on the display 372. In addition, the alert control unit 366 outputs a drive signal to the alarm device 38 of the hot-water heating apparatus 30. Consequently, via lighting of the LED 371 on the remote control 37, display on the display 372, and an alarm issued from the alarm device 38, the end user is notified that the ability of the geothermal heat pump system 1 may be deteriorated.

Generally, when an underground pipe of the underground heat exchanger 21 is long, the flow rate of the heat medium measured by the heat collection flow sensor 18 becomes higher than normal and the temperatures of the heat medium measured by the heat collection return sensor 19 and the heat collection supply sensor 20 become higher than normal. On the other hand, when the underground pipe of the underground heat exchanger 21 is short, the flow rate of the heat medium measured by the heat collection flow sensor 18 becomes lower than normal and the temperatures of the heat medium measured by the heat collection return sensor 19 and the heat collection supply sensor 20 become lower than normal.

In contrast, in the geothermal heat pump system 1 of the present embodiment, the bypass 24 is installed in the preceding stage of the underground heat exchanger 21 of the heat collection circuit 12 and the heat medium bypasses the underground pipe of the underground heat exchanger 21 when the flow rate and temperature of the heat medium are measured. This configuration makes it possible to obtain appropriate values of the flow rate and temperature of the heat medium without being affected by length of the underground pipe of the underground heat exchanger 21 and reduce errors in the estimated concentration of the brine. Consequently, if the installer has forgotten to put brine during installation, the end user can find this by comparing estimated concentration with appropriate concentration of the brine set in advance by the installer and can prevent freezing of the heat medium caused by a low brine concentration.

According to the present embodiment, if the estimated concentration of the brine is outside the appropriate range, the operation of the geothermal heat pump system 1 is stopped. Then, the end user is notified via lighting of the LED 371 on the remote control 37, display on the display 372, and an alarm issued from the alarm device 38. This allows the end user to take measures against situations in which the brine concentration is higher than normal or lower than normal. That is, the present embodiment makes it possible to reliably prevent malfunctions caused by any situation in which the brine concentration is higher than normal or lower than normal.

Further, according to the present embodiment, when the brine concentration is lower than the appropriate range, the end user is notified that there is a risk that the heat medium will freeze if the operation is continued. On the other hand, when the brine concentration is higher than the appropriate range, the end user is notified that there is a risk that the ability of the geothermal heat pump system 1 may be deteriorated if the operation is continued. Thus, more detailed information is provided to the end user.

Furthermore, in the geothermal heat pump system 1 of the present embodiment, appropriate concentration values of plural commonly used types of brine are pre-stored in the storage unit 367. Then, when the installer specifies the type of brine to be used by entering or selecting it via the remote control 37, an appropriate value available from the storage unit 367 is selected. Furthermore, the installer sets an appropriate range of brine concentration via the remote control 37. This configuration supports plural types of brine available on the market without restrictions on the type of brine, and thus increases versatility of the geothermal heat pump system 1.

According to the present embodiment, by lighting of the LED 371 on the remote control 37, the end user is notified that the brine concentration in the heat medium of the heat collection circuit 12 is outside the appropriate range. Thus, the end user can be notified intuitively through the visual sense if there is anything wrong with brine concentration.

According to the present embodiment, a character string and an icon on the display 372 of the remote control 37, the end user is notified that the brine concentration in the heat medium of the heat collection circuit 12 is outside the appropriate range and that there is a possible risk resulting therefrom. Thus, more detailed information can be provided to the end user.

According to the present embodiment, by driving the alarm device 38, the end user is notified that the brine concentration in the heat medium of the heat collection circuit 12 is outside the appropriate range. Thus, the end user can be notified intuitively through the auditory sense if there is anything wrong with brine concentration.

### <Variation>

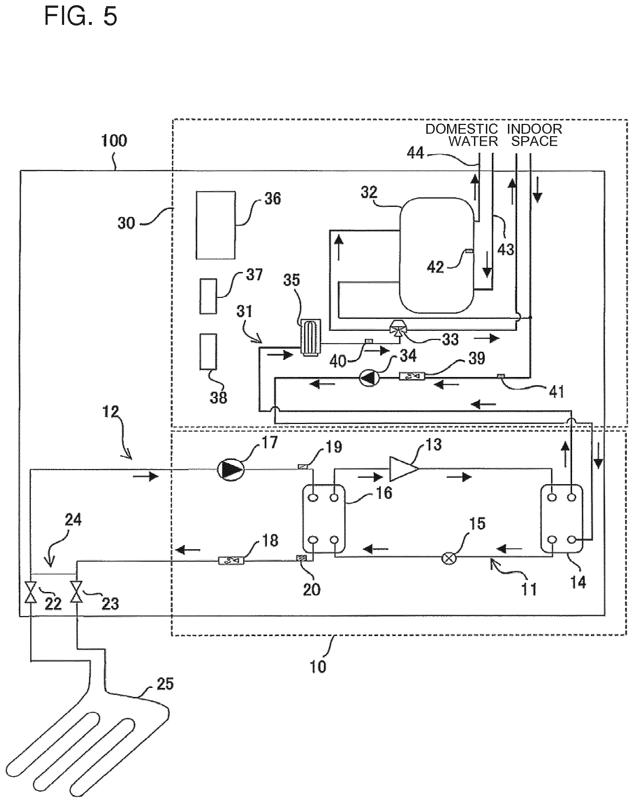

Fig. 5 is a system configuration diagram of a variation of the geothermal heat pump system of a variation of the embodiment of the present invention. The geothermal heat pump system 100 of the variation is connected with an underground heat exchanger 25 of the horizontal loop type instead of the underground heat exchanger 21 of the borehole type. The underground heat exchanger 25 is tubular in shape and buried horizontally in a superficial layer of the ground 1 m to 2.5 m deep. The rest of the configuration is similar to the geothermal heat pump system 1 of Fig. 1. The geothermal heat pump system 100 provides advantages similar to those described above.

### Reference Signs List

1 geothermal heat pump system 10 heat pump apparatus 11 refrigerant circuit 12 heat collection circuit 13 compressor 14 water-refrigerant heat exchanger 15 expansion valve 16 refrigerant-brine heat exchanger 17 heat collection pump 18 heat collection flow sensor 19 heat collection return sensor 20 heat collection supply sensor 21 underground heat exchanger 22 bypass valve 23 bypass valve 24 bypass 25 underground heat exchanger 30 hot-water heating apparatus 31 water circuit 32 hot-water storage tank33 three-way valve 34 hot-water circulating pump 35 electric heater 36 controller 37 remote control 38 alarm device 39 hot-water circulation flow sensor 40 water temperature sensor 41 water temperature sensor 42 hot-water storage tank sensor 43 water supply pipe 44 hot-water outlet pipe 100 geothermal heat pump system 360 processing circuit 361 bypass mechanism drive unit 362 measuring unit 363 estimation unit 364 determination unit 365 operation control unit 366 alert control unit 367 storage unit 371 LED 372 display

## Claims

1. A geothermal heat pump system (1) comprising:
a heat pump apparatus (10) including a compressor (13), a first heat exchanger (14) configured to exchange heat between water supplied to a load side and refrigerant, an expansion valve (15), a second heat exchanger (16) configured to exchange heat between the refrigerant and a heat medium, a heat collection pump (17) and a third heat exchanger (21, 25) configured to exchange heat between the heat medium and geothermal heat, and
a controller (36),
wherein the compressor (13), the first heat exchanger (14), the expansion valve (15), and the second heat exchanger (16) are connected in sequence by pipes, thereby forming a refrigerant circuit (11) through which the refrigerant circulates, the heat collection pump (17), the second heat exchanger (16), and the third heat exchanger (21, 25) are connected in sequence by pipes, thereby forming a heat collection circuit (12) through which the heat medium circulates, and the heat collection circuit (12) includes a bypass mechanism allowing the heat medium to bypass the third heat exchanger (21, 25) when the heat medium circulates, and
the controller (36)
drives, when operation of the geothermal heat pump system (1) is started, the bypass mechanism to allow the heat medium to bypass the third heat exchanger (21, 25) and circulate in the heat collection circuit (12) after a lapse of a predetermined time,
estimates concentration of brine in the heat medium circulating through the heat collection circuit (12),
determines whether the concentration of the brine falls outside an appropriate range, and
stops the operation of the geothermal heat pump system (1) when the concentration of the brine falls outside the appropriate range,
wherein the geothermal heat pump system (1) further comprises a storage unit (367) storing data representing relationships of the concentration of the brine to temperature and flow rate of the heat medium,
a heat collection return sensor (19) installed on an inflow side of the second heat exchanger (16) and configured to detect the temperature of the heat medium flowing into the second heat exchanger (16);
a heat collection supply sensor (20) installed on an outflow side of the second heat exchanger (16) and configured to detect the temperature of the heat medium flowing out of the second heat exchanger (16); and
a heat collection flow sensor (18) installed between the second heat exchanger (16) and the bypass mechanism and configured to detect the flow rate of the heat medium circulating through the heat collection circuit (12),
wherein the controller (36)
measures the flow rate of the heat medium circulating in the heat collection circuit (12) based on a detection result obtained by the heat collection flow sensor (18), measures return temperature of the heat medium flowing into the second heat exchanger (16) based on a detection result obtained by the heat collection return sensor (19), and measures supply temperature of the heat medium flowing out of the second heat exchanger (16) based on a detection result obtained by the heat collection supply sensor (18), and
searches the data stored in the storage unit (367) based on the measured flow rate of the heat medium, the measured return temperature of the heat medium, and the measured supply temperature of the heat medium, and estimates the concentration of the brine in the heat medium.

2. The geothermal heat pump system (1) of claim 1, wherein, when the concentration of the brine falls outside the appropriate range, the controller (36) notifies an end user of a risk likely to occur if the operation of the geothermal heat pump system (1) is continued.

3. The geothermal heat pump system (1) of claim 1 or claim 2 , further comprising a remote control (37), wherein
a type of the brine and the appropriate range of the concentration of the brine are entered by an installer via the remote control (37) and recorded in the storage unit (367).

4. The geothermal heat pump system (1) of claim 3 as dependent on claim 2, wherein when the concentration of the brine is lower than the appropriate range, the controller (36) notifies the end user that there is a risk of freezing of the heat medium if the operation of the geothermal heat pump system (1) is continued, and when the concentration of the brine is higher than the appropriate range, the controller notifies the end user that there is a risk of lowering in ability of the heat pump apparatus (10) if the operation of the geothermal heat pump system (1) is continued.

5. The geothermal heat pump system (1) of claim 4, wherein the controller (36) notifies the end user of the risk via the remote control (37).

6. The geothermal heat pump system (1) of claim 5, wherein:
the remote control (37) includes an LED (371); and
the controller (36) notifies the end user of the risk by lighting the LED (371).

7. The geothermal heat pump system (1) of claim 5 or 6, wherein:
the remote control (37) includes a display (372); and
the controller (36) notifies the end user of the risk by displaying details of the risk on the display (372).

8. The geothermal heat pump system (1) of any one of claims 5 to 7, further comprising an alarm device (38), wherein
the controller (36) notifies the end user of the risk by driving the alarm device (38).

9. A method for controlling a geothermal heat pump system (1) that comprises a heat pump apparatus (10) and a controller (36), the heat pump apparatus (10) including a compressor (13), a first heat exchanger (14) configured to exchange heat between water supplied to a load side and refrigerant, an expansion valve (15), a second heat exchanger (16) configured to exchange heat between the refrigerant and a heat medium, a heat collection pump (17) and a third heat exchanger (21, 25) configured to exchange heat between the heat medium and geothermal heat, a storage unit (367) storing data representing relationships of concentration of brine in the heat medium to temperature and flow rate of the heat medium,
wherein the compressor (13), the first heat exchanger (14), the expansion valve (15), and the second heat exchanger (16) are connected in sequence by pipes, thereby forming a refrigerant circuit (11) through which the refrigerant circulates, the heat collection pump (17), the second heat exchanger (16), and the third heat exchanger (21, 25) are connected in sequence by pipes, thereby forming a heat collection circuit (12) through which the heat medium circulates, and the heat collection circuit (12) includes a bypass mechanism allowing the heat medium to bypass the third heat exchanger (21, 25) when the heat medium circulates,
wherein the geothermal heat pump system further comprises a heat collection return sensor (19) installed on an inflow side of the second heat exchanger (16) and configured to detect the temperature of the heat medium flowing into the second heat exchanger (16); a heat collection supply sensor (20) installed on an outflow side of the second heat exchanger (16) and configured to detect the temperature of the heat medium flowing out of the second heat exchanger (16); and a heat collection flow sensor (18) installed between the second heat exchanger (16) and the bypass mechanism and configured to detect the flow rate of the heat medium circulating through the heat collection circuit (12),
the method comprising:
a bypass mechanism driving step of driving the bypass mechanism;
a measuring step of measuring, after execution of the bypass mechanism driving step, the flow rate of the heat medium circulating in the heat collection circuit (12) based on a detection result obtained by the heat collection flow sensor (18), return temperature of the heat medium flowing into the second heat exchanger (16) based on a detection result obtained by the heat collection return sensor (19), and supply temperature of the heat medium flowing out of the second heat exchanger (16) based on a detection result obtained by the heat collection supply sensor (18);
an estimation step of estimating the brine concentration in the heat medium based on measurement results obtained by the measuring step and the data stored in the storage unit (367) which based on measured flow rate of the heat medium, the measured return temperature of the heat medium, and the measured supply temperature of the heat medium, is searched for ;
a determination step of determining whether the brine concentration estimated in the estimation step falls within an appropriate range; and
an operation control step of controlling operation of the geothermal heat pump system (1) based on a result obtained by the determination step.

10. The method for controlling a geothermal heat pump system (1) of claim 9, wherein the appropriate range of the concentration of the brine is stored in the storage unit (367).

## Patentansprüche

1. Geothermisches Wärmepumpensystem (1), umfassend:
eine Wärmepumpenvorrichtung (10), umfassend einen Verdichter (13), einen ersten Wärmetauscher (14), der eingerichtet ist, Wärme zwischen einer Lastseite zugeführtem Wasser und Kältemittel auszutauschen, ein Expansionsventil (15), einen zweiten Wärmetauscher (16), der eingerichtet ist, Wärme zwischen dem Kältemittel und einem Wärmemedium auszutauschen, eine Wärmesammelpumpe (17) und einen dritten Wärmetauscher (21, 25), der eingerichtet ist, Wärme zwischen dem Wärmemedium und geothermischer Wärme auszutauschen, und
eine Steuerungseinheit (36),
wobei der Verdichter (13), der erste Wärmetauscher (14), das Expansionsventil (15) und der zweite Wärmetauscher (16) nacheinander durch Leitungen verbunden sind, wodurch sie einen Kältemittelkreislauf (11) bilden, durch den das Kältemittel zirkuliert, die Wärmesammelpumpe (17), der zweite Wärmetauscher (16) und der dritte Wärmetauscher (21, 25) nacheinander durch Leitungen verbunden sind, wodurch sie einen Wärmesammelkreislauf (12) bilden, durch den das Wärmemedium zirkuliert, und der Wärmesammelkreislauf (12) einen Umgehungsmechanismus umfasst, der es dem Wärmemedium ermöglicht, den dritten Wärmetauscher (21, 25) zu umgehen, wenn das Wärmemedium zirkuliert, und
die Steuerungseinheit (36)
den Umgehungsmechanismus antreibt, wenn der Betrieb des geothermischen Wärmepumpensystems (1) gestartet wird, um dem Wärmemedium zu ermöglichen, den dritten Wärmetauscher (21, 25) zu umgehen und nach Ablauf einer vorbestimmten Zeit in dem Wärmesammelkreislauf (12) zu zirkulieren,
die Konzentration von Sole in dem durch den Wärmesammelkreislauf (12) zirkulierenden Wärmemedium schätzt,
bestimmt, ob die Konzentration der Sole außerhalb eines angemessenen Bereichs liegt, und
den Betrieb des geothermischen Wärmepumpensystems (1) stoppt, wenn die Konzentration der Sole außerhalb eines angemessenen Bereichs liegt,
wobei das geothermische Wärmepumpensystem (1) ferner umfasst: eine Speichereinheit (367), die Daten speichert, die Beziehungen der Konzentration der Sole zu Temperatur und Strömungsrate des Wärmemediums darstellen,
einen Wärmesammelrücklaufsensor (19), der auf einer Einströmseite des zweiten Wärmetauschers (16) installiert ist und eingerichtet ist, die Temperatur des in den zweiten Wärmetauscher (16) strömenden Wärmemediums zu erfassen;
einen Wärmesammelzulaufsensor (20), der auf einer Ausströmseite des zweiten Wärmetauschers (16) installiert ist und eingerichtet ist, die Temperatur des aus dem zweiten Wärmetauscher (16) strömenden Wärmemediums zu erfassen; und
einen Wärmesammelströmungssensor (18), der zwischen dem zweiten Wärmetauscher (16) und dem Umgehungsmechanismus installiert ist und eingerichtet ist, die Strömungsrate von dem durch den Wärmesammelkreislauf (12) zirkulierenden Wärmemedium zu erfassen,
wobei die Steuerungseinheit (36)
die Strömungsrate des im Wärmesammelkreislauf (12) zirkulierenden Wärmemediums auf Grundlage eines durch den Wärmesammelströmungssensor (18) erhaltenen Erfassungsergebnisses misst, die Rücklauftemperatur des in den zweiten Wärmetauscher (16) strömenden Wärmemediums auf Grundlage eines durch den Wärmesammelrücklaufsensor (19) erhaltenen Erfassungsergebnisses misst, und die Zulauftemperatur des aus dem zweiten Wärmetauscher (16) strömenden Wärmemediums auf Grundlage eines durch den Wärmesammelzulaufsensor (18) erhaltenen Erfassungsergebnisses misst, und
die in der Speichereinheit (367) gespeicherten Daten auf Grundlage der gemessenen Strömungsrate des Wärmemediums, der gemessenen Rücklauftemperatur des Wärmemediums und der gemessenen Zulauftemperatur des Wärmemediums durchsucht und die Konzentration der Sole im Wärmemedium schätzt.

2. Geothermisches Wärmepumpensystem (1) nach Anspruch 1, wobei, wenn die Konzentration der Sole außerhalb eines angemessenen Bereichs liegt, die Steuerungseinheit (36) einem Endbenutzer ein Risiko meldet, das wahrscheinlich auftreten wird, wenn der Betrieb des geothermischen Wärmepumpensystems (1) fortgeführt wird.

3. Geothermisches Wärmepumpensystem (1) nach Anspruch 1 oder 2, ferner umfassend eine Fernsteuerung (37), wobei
eine Art der Sole und der angemessene Bereich der Konzentration der Sole durch einen Installateur über die Fernsteuerung (37) eingegeben werden und in der Speichereinheit (367) aufgezeichnet werden.

4. Geothermisches Wärmepumpensystem (1) nach Anspruch 3 in Abhängigkeit von Anspruch 2, wobei, wenn die Konzentration der Sole niedriger ist als der angemessene Bereich, die Steuerungseinheit (36) einem Endbenutzer meldet, dass ein Risiko besteht, dass das Wärmemedium gefriert, wenn der Betrieb des geothermischen Wärmepumpensystems (1) fortgeführt wird, und wenn die Konzentration der Sole höher ist als der angemessene Bereich, die Steuerungseinheit dem Endbenutzer meldet, dass ein Risiko besteht, dass die Leistungsfähigkeit der Wärmepumpenvorrichtung (10) abnimmt, wenn der Betrieb des geothermischen Wärmepumpensystems (1) fortgeführt wird.

5. Geothermisches Wärmepumpensystem (1) nach Anspruch 4, wobei die Steuerungseinheit (36) dem Endbenutzer das Risiko über die Fernsteuerung (37) meldet.

6. Geothermisches Wärmepumpensystem (1) nach Anspruch 5, wobei:
die Fernsteuerung (37) eine LED (371) umfasst; und
die Steuerungseinheit (36) dem Endbenutzer das Risiko durch Beleuchten der LED (371) meldet.

7. Geothermisches Wärmepumpensystem (1) nach Anspruch 5 oder 6, wobei:
die Fernsteuerung (37) eine Anzeige (372) umfasst; und
die Steuerungseinheit (36) dem Endbenutzer das Risiko durch Anzeigen von Details des Risikos auf der Anzeige (372) meldet.

8. Geothermisches Wärmepumpensystem (1) nach einem der Ansprüche 5 bis 7, ferner umfassend eine Alarmeinrichtung (38), wobei
die Steuerungseinheit (36) dem Endbenutzer das Risiko durch Antreiben der Alarmeinrichtung (38) meldet.

9. Verfahren zur Steuerung eines geothermischen Wärmepumpensystems (1), das eine Wärmepumpenvorrichtung (10) und eine Steuerungseinheit (36) umfasst, wobei die Wärmepumpenvorrichtung (10) einen Verdichter (13), einen ersten Wärmetauscher (14), der eingerichtet ist, Wärme zwischen einer Lastseite zugeführtem Wasser und Kältemittel auszutauschen, ein Expansionsventil (15), einen zweiten Wärmetauscher (16), der eingerichtet ist, Wärme zwischen dem Kältemittel und einem Wärmemedium auszutauschen, eine Wärmesammelpumpe (17) und einen dritten Wärmetauscher (21, 25), der eingerichtet ist, Wärme zwischen dem Wärmemedium und geothermischer Wärme auszutauschen, umfasst, eine Speichereinheit (367) die Daten speichert, die Beziehungen von Konzentration von Sole im Wärmemedium zu Temperatur und Strömungsrate des Wärmemediums darstellen,
wobei der Verdichter (13), der erste Wärmetauscher (14), das Expansionsventil (15) und der zweite Wärmetauscher (16) nacheinander durch Leitungen verbunden sind, wodurch sie einen Kältemittelkreislauf (11) bilden, durch den das Kältemittel zirkuliert, die Wärmesammelpumpe (17), der zweite Wärmetauscher (16) und der dritte Wärmetauscher (21, 25) nacheinander durch Leitungen verbunden sind, wodurch sie einen Wärmesammelkreislauf (12) bilden, durch den das Wärmemedium zirkuliert, und der Wärmesammelkreislauf (12) einen Umgehungsmechanismus umfasst, der es dem Wärmemedium ermöglicht, den dritten Wärmetauscher (21, 25) zu umgehen, wenn das Wärmemedium zirkuliert,
wobei das geothermische Wärmepumpensystem ferner umfasst: einen Wärmesammelrücklaufsensor (19), der auf einer Einströmseite des zweiten Wärmetauschers (16) installiert ist und eingerichtet ist, die Temperatur des in den zweiten Wärmetauscher (16) strömenden Wärmemediums zu erfassen; einen Wärmesammelzulaufsensor (20), der auf einer Ausströmseite des zweiten Wärmetauschers (16) installiert ist und eingerichtet ist, die Temperatur des aus dem zweiten Wärmetauscher (16) strömenden Wärmemediums zu erfassen; und einen Wärmesammelströmungssensor (18), der zwischen dem zweiten Wärmetauscher (16) und dem Umgehungsmechanismus installiert ist und eingerichtet ist, die Strömungsrate des durch den Wärmesammelkreislauf (12) zirkulierenden Wärmemediums zu erfassen,
wobei das Verfahren umfasst:
einen Umgehungsmechanismus-Antriebsschritt des Antreibens des Umgehungsmechanismus;
einen Messschritt des Messens, nach Ausführung des Umgehungsmechanismus-Antriebsschritts, der Strömungsrate des im Wärmesammelkreislauf (12) zirkulierenden Wärmemediums auf Grundlage eines durch den Wärmesammelströmungssensor (18) erhaltenen Erfassungsergebnisses, einer Rücklauftemperatur des in den zweiten Wärmetauscher (16) strömenden Wärmemediums auf Grundlage eines durch den Wärmesammelrücklaufsensor (19) erhaltenen Erfassungsergebnisses, und einer Zulauftemperatur des aus dem zweiten Wärmetauscher (16) strömenden Wärmemediums auf Grundlage eines durch den Wärmesammelzulaufsensor (18) erhaltenen Erfassungsergebnisses;
einen Schätzschritt des Schätzens der Solekonzentration im Wärmemedium auf Grundlage von Messergebnissen, die durch den Messschritt erhalten werden, und der in der Speichereinheit (367) gespeicherten Daten, nach denen auf Grundlage der gemessenen Strömungsrate des Wärmemediums, der gemessenen Rücklauftemperatur des Wärmemediums und der gemessenen Zulauftemperatur des Wärmemediums gesucht wird;
einen Bestimmungsschritt des Bestimmens, ob die im Schätzschritt geschätzte Solekonzentration im angemessenen Bereich liegt; und
einen Betriebssteuerungsschritt des Steuerns eines Betriebs des geothermischen Wärmepumpensystems (1) auf Grundlage eines durch den Bestimmungsschritt erhaltenen Ergebnisses.

10. Verfahren zum Steuern eines geothermischen Wärmepumpensystems (1) nach Anspruch 9, wobei der angemessene Bereich der Konzentration der Sole in der Speichereinheit (367) gespeichert wird.

## Revendications

1. Système de pompe à chaleur géothermique (1) comprenant :
un appareil de pompe à chaleur (10) comprenant un compresseur (13), un premier échangeur de chaleur (14) configuré pour échanger la chaleur entre l'eau fournie à un côté de charge et le réfrigérant, une valve d'expansion (15), un deuxième échangeur de chaleur (16) configuré pour échanger la chaleur entre le réfrigérant et un fluide caloporteur, une pompe de collecte de chaleur (17) et un troisième échangeur de chaleur (21, 25) configuré pour échanger la chaleur entre le fluide caloporteur et la chaleur géothermique, et
un organe de commande (36),
dans lequel le compresseur (13), le premier échangeur de chaleur (14), la valve d'expansion (15) et le deuxième échangeur de chaleur (16) sont raccordés en séquence par des tuyaux, formant ainsi un circuit de réfrigérant (11) à travers lequel circule le réfrigérant, la pompe de collecte de chaleur (17), le deuxième échangeur de chaleur (16) et le troisième échangeur de chaleur (21, 25) sont raccordés en séquence par des tuyaux, formant ainsi un circuit de collecte de chaleur (12) à travers lequel circule le fluide caloporteur, et le circuit de collecte de chaleur (12) comprend un mécanique de dérivation permettant au fluide caloporteur de contourner le troisième échangeur de chaleur (21, 25) lorsque le fluide caloporteur circule, et
l'organe de commande (36)
entraîne, lorsque le fonctionnement du système de pompe à chaleur géothermique (1) a commencé, le mécanisme de dérivation pour permettre au fluide caloporteur de contourner le troisième échangeur de chaleur (21, 25) et circuler dans le circuit de collecte de chaleur (12) après un intervalle de temps prédéterminé,
estime la concentration de saumure dans le fluide caloporteur circulant dans le circuit de collecte de chaleur (12),
détermine si la concentration de saumure chute hors d'une plage appropriée, et
arrête le fonctionnement du système de pompe à chaleur géothermique (1) lorsque la concentration de saumure chute hors de la plage appropriée,
dans lequel le système de pompe à chaleur géothermique (1) comprend en outre une unité de stockage (367) stockant des données représentant les relations de la concentration de saumure par rapport à la température et au débit du fluide caloporteur,
un capteur de retour de collecte de chaleur (19) installé d'un côté d'entrée du deuxième échangeur de chaleur (16) et configuré pour détecter la température du fluide caloporteur s'écoulant dans le deuxième échangeur de chaleur (16) ;
un capteur d'alimentation de collecte de chaleur (20) installé du côté de la sortie du deuxième échangeur de chaleur (16) et configuré pour détecter la température du fluide caloporteur s'écoulant hors du deuxième échangeur de chaleur (16) ; et
un capteur d'écoulement de collecte de chaleur (18) installé entre le deuxième échangeur de chaleur (16) et le mécanisme de dérivation et configuré pour détecter le débit du fluide caloporteur circulant dans le circuit de collecte de chaleur (12),
dans lequel l'organe de commande (36)
mesure le débit du fluide caloporteur circulant dans le circuit de collecte de chaleur (12) sur la base d'un résultat de détection obtenu par le capteur d'écoulement de collecte de chaleur (18), mesure la température de retour du fluide caloporteur s'écoulant dans le deuxième échangeur de chaleur (16) sur la base d'un résultat de détection obtenu par le capteur de retour de collecte de chaleur (19) et mesure la température d'alimentation du fluide caloporteur s'écoulant hors du deuxième échangeur de chaleur (16) sur la base d'un résultat de détection obtenu par le capteur d'alimentation de collecte de chaleur (18), et
recherche les données stockées dans l'unité de stockage (367) sur la base du débit mesuré du fluide caloporteur, de la température de retour mesurée du fluide caloporteur, et de la température d'alimentation mesurée du fluide caloporteur, et estime la concentration de la saumure dans le fluide caloporteur.

2. Système de pompe à chaleur géothermique (1) selon la revendication 1, dans lequel, lorsque la concentration de la saumure chute hors de la plage appropriée, l'organe de commande (36) indique à un utilisateur final, un risque susceptible de se produire si le fonctionnement du système de pompe à chaleur géothermique (1) continue.

3. Système de pompe à chaleur géothermique (1) selon la revendication 1 ou la revendication 2, comprenant en outre une commande à distance (37), dans lequel :
un type de saumure et la plage appropriée de la concentration de saumure sont entrés par un installateur via la commande à distance (37) et enregistrés dans l'unité de stockage (367).

4. Système de pompe à chaleur géothermique (1) selon la revendication 3 lorsqu'elle dépend de la revendication 2, dans lequel lorsque la concentration de saumure est inférieure à la plage appropriée, l'organe de commande (36) indique à l'utilisateur final qu'il existe un risque de congélation du fluide caloporteur si le fonctionnement du système de pompe à chaleur géothermique (1) continue, et lorsque la concentration de saumure est supérieure à la plage appropriée, l'organe de commande indique à l'utilisateur final qu'il y a un risque de réduction de capacité de l'appareil de pompe à chaleur (10) si le fonctionnement du système de pompe à chaleur géothermique (1) continue.

5. Système de pompe à chaleur géothermique (1) selon la revendication 4, dans lequel l'organe de commande (36) indique à l'utilisateur final, le risque via la commande à distance (37).

6. Système de pompe à chaleur géothermique (1) selon la revendication 5, dans lequel :
la commande à distance (37) comprend une LED (371) ; et
l'organe de commande (36) indique à l'utilisateur final, le risque en éclairant la LED (371).

7. Système de pompe à chaleur géothermique (1) selon la revendication 5 ou 6, dans lequel :
la commande à distance (37) comprend un écran (372) ; et
l'organe de commande (36) indique à l'utilisateur final, le risque en affichant les détails du risque sur l'écran (372).

8. Système de pompe à chaleur géothermique (1) selon l'une quelconque des revendications 5 à 7, comprenant en outre un dispositif d'alarme (38), dans lequel :
l'organe de commande (36) indique à l'utilisateur final, le risque en déclenchant le dispositif d'alarme (38).

9. Procédé pour commander un système de pompe à chaleur géothermique (1) qui comprend un appareil de pompe à chaleur (10) et un organe de commande (36), l'appareil de pompe à chaleur (10) comprenant un compresseur (13), un premier échangeur de chaleur (14) configuré pour échanger la chaleur entre l'eau fournie à un côté de charge et le réfrigérant, une valve d'expansion (15), un deuxième échangeur de chaleur (16) configuré pour échanger la chaleur entre le réfrigérant et un fluide caloporteur, une pompe de collecte de chaleur (17) et un troisième échangeur de chaleur (21, 25) configuré pour échanger la chaleur entre le fluide caloporteur et la chaleur géothermique, une unité de stockage (367) stockant des données représentant les relations de concentration de saumure dans le fluide caloporteur par rapport à la température et au débit du fluide caloporteur,
dans lequel le compresseur (13), le premier échangeur de chaleur (14), la valve d'expansion (15) et le deuxième échangeur de chaleur (16) sont raccordés en séquence par des tuyaux, formant ainsi un circuit de réfrigérant (11) à travers lequel le réfrigérant circule, la pompe de collecte de chaleur (17), le deuxième échangeur de chaleur (16) et le troisième échangeur de chaleur (21, 25) sont raccordés en séquence par des tuyaux, formant ainsi un circuit de collecte de chaleur (12) à travers lequel le fluide caloporteur circule, et le circuit de collecte de chaleur (12) comprend un mécanisme de dérivation permettant au fluide caloporteur de contourner le troisième échangeur de chaleur (21, 25) lorsque le fluide caloporteur circule,
dans lequel le système de pompe à chaleur géothermique comprend en outre un capteur de retour de collecte de chaleur (19) installé sur un côté d'entrée du deuxième échangeur de chaleur (16) et configuré pour détecter la température du fluide caloporteur s'écoulant dans le deuxième échangeur de chaleur (16) ; un capteur d'alimentation de collecte de chaleur (20) installé d'un côté de la sortie du deuxième échangeur de chaleur (16) et configuré pour détecter la température du fluide caloporteur s'écoulant hors du deuxième échangeur de chaleur (16) ; et un capteur d'écoulement de collecte de chaleur (18) installé entre le deuxième échangeur de chaleur (16) et le mécanisme de dérivation et configuré pour détecter le débit du fluide caloporteur circulant à travers le circuit de collecte de chaleur (12),
le procédé comprenant :
une étape d'entraînement de mécanisme de dérivation consistant à entraîner le mécanisme de dérivation ;
une étape de mesure consistant à mesurer, après l'exécution de l'étape d'entraînement de mécanisme de dérivation, le débit du fluide caloporteur circulant dans le circuit de collecte de chaleur (12) sur la base d'un résultat de détection obtenu par le capteur d'écoulement de collecte de chaleur (18), la température de retour du fluide caloporteur s'écoulant dans le deuxième échangeur de chaleur (16) sur la base d'un résultat de détection obtenu par le capteur de retour de collecte de chaleur (19), et la température d'alimentation du fluide caloporteur s'écoulant hors du deuxième échangeur de chaleur (16) sur la base d'un résultat de détection obtenu par le capteur d'alimentation de collecte de chaleur (18) ;
une étape d'estimation consistant à estimer la concentration de saumure dans le fluide caloporteur sur la base de résultats de mesure obtenus par l'étape de mesure et les données stockées dans l'unité de stockage (367) qui, sur la base du débit mesuré du fluide caloporteur, de la température de retour mesurée du fluide caloporteur, et de la température d'alimentation mesurée du dispositif de coupe, sont recherchées ;
une étape de détermination consistant à déterminer si la concentration de saumure estimée à l'étape d'estimation chute dans une plage appropriée ; et
une étape de commande de fonctionnement consistant à commander le fonctionnement du système de pompe à chaleur géothermique (1) sur la base d'un résultat obtenu par l'étape de détermination.

10. Procédé pour commander un système de pompe à chaleur géothermique (1) selon la revendication 9, dans lequel la plage appropriée de la concentration de saumure est stockée dans l'unité de stockage (367).
